# EUROPEAN PATENT SPECIFICATION

(11) **EP 3 015 741 B1**
(45) Date of publication and mention of the grant of the patent: **21.02.2018**
(21) Application number: 15192375.2
(22) Date of filing: 30.10.2015
(51) Int. Cl.: F16H 48/20, F16H 48/08

(54) **DIFFERENTIAL**
DIFFERENTIAL
DIFFÉRENTIEL

(30) Priority: 30.10.2014 AU 2014904349
(43) Date of publication of application: 04.05.2016
(73) Proprietor: Ted Golf Equipment Co., Ltd., Changzhou, Jiangsu 213023 (CN)
(72) Inventor: GONG, Jiaxiong, 213023 Changzhou (CN)
(74) Representative: Zimmermann, Tankred Klaus

(56) References cited:
- GB-A- 986 817
- US-A- 3 008 350
- US-A- 3 364 792

## Description

### Field of the Invention

This invention relates to a differential, and more particularly to a differential for a golf buggy.

### Background of the Invention

A differential allows the shafts connected to the differential to rotate at different speeds, which is required to enable turning of a vehicle, as the outside wheel of the vehicle is required to travel at a speed faster than the inside wheel when going around corner. In a situation where the traction on one wheel is lower than the fraction on the other wheel a standard differential, or 'open differential', will send more power to the wheel that has lower traction and thereby reduce the power sent to the wheel with better traction.

A problem with a standard differential, when used on an electric golf buggy, is that due to the constantly varying surface of a golf course the resistance between the wheels of the buggy on the surface of the golf course is constantly charging. A few of the factors that result in the varying resistance are the dampness of the course, grass length, and hills/topography of the course.

The differing resistance in the wheels can lead to the wheel with the lower resistance spinning and the higher resistance wheel no longer rotating, resulting in the buggy not moving. Furthermore, if the buggy is then physically moved by the user so that the spinning wheel engages the ground severe shock loads are transferred to the gears, often causing failure of the differential.

In addition, as a result of the constantly varying surface of a golf course a standard differential will almost constantly be allowing the wheels to rotate at different speeds. Due to the wheels rotating at different speeds is difficult to have an electric golf push buggy move in a relatively straight line.

US 3,364,792 A discloses a locking differential in which axles are engaged with bevel gears of a spider differential. Relative rotation between the axles when they are urged inwardly or outwardly is resisted by the inner ends of the axles or the bevel gears frictionally engaging a stop block that is loosely mounted on a shaft interconnecting opposed pinions of the differential.

### Summary of the Invention

It is an object of the present invention to address the above problem.

This object is achieved by the subject matter as defined in the independent claim.

The invention provides a differential for a golf buggy comprising: a drive gear; one or more planetary gears connected to the drive gear; a first bevel gear mated with the one or more planetary gears; and a second bevel gear mated with the one or more planetary gears; wherein a torque transmission damper between the first bevel gear and the second bevel gear causes the first bevel gear and the second bevel gear to rotate at the same speed when the difference in torque between the first bevel gear and the second bevel gear is less than a predetermined level. The transmission damper comprises a first cylinder attached to the first bevel gear and a second cylinder attached to the second bevel gear, an outer surface of the first cylinder being slidably received within an inner surface of the second cylinder

By providing a torque transmission damper between the first bevel gear and the second bevel gear it is possible to have the differential act as a "locked" differential at low differences in torque between the first bevel gear and the second bevel gear.

The outer surface of the first cylinder is slidably received within an inner surface of the second cylinder so that the outer surface of the first cylinder slidably rotates relative to the inner surface of the second cylinder. The transmission damper may comprises a friction medium between the first cylinder and the second cylinder so the first and second cylinders engage to rotate together below the predetermined level. The first cylinder may be permanently attached to the first bevel gear, and namely formed therewith, and the second cylinder may be permanently attached to the second bevel gear, and again integrally formed together as one component.

By having a friction medium as the transmission damper the same overall design can be used for the differential while still being able to adjust the predetermined level by using different friction mediums. The friction medium may be grease. The predetermined level may be between approximately 3.5Nm and 4.5Nm.

In some embodiments the first bevel gear and the first cylinder house a first axle, an end portion of the first axle being fixedly received in the first cylinder, and further still an end portion of the first axle may be slidably received within a hollow interior of the second bevel gear. The end portion of the axle received within the second bevel gear is adjacent to the portion of the axle received in the first cylinder.

In some embodiments the one or more planetary gears are housed in the drive gear. The drive gear may have a cut out for each of the one or more planetary gears. The one or more planetary gears may extend away from the drive gear to engage the first and second bevel gears. The one or more planetary gears are retained in a position that is half way through a thickness of the drive gear. By housing the planetary gears in the drive gear the differential can be made significantly more compact compared to if the planetary gears are in a separate housing. The drive gear, planetary gears and bevel gears may be formed from a plastics material. The drive gear may also comprises an aperture that supports an outer surface of the second cylinder.

In a preferred embodiment there are four planetary gears.

### Brief Description of the Drawing

An embodiment, incorporating all aspects of the invention, will now be described by way of example only with reference to the accompanying drawings in which;
Figure 1 is an isometric view of a transmission system for an electric golf buggy; and
Figure 2 is a cross sectional view of a differential in the transmission system of Figure 1.

### Detailed Description of an Embodiment of the Invention

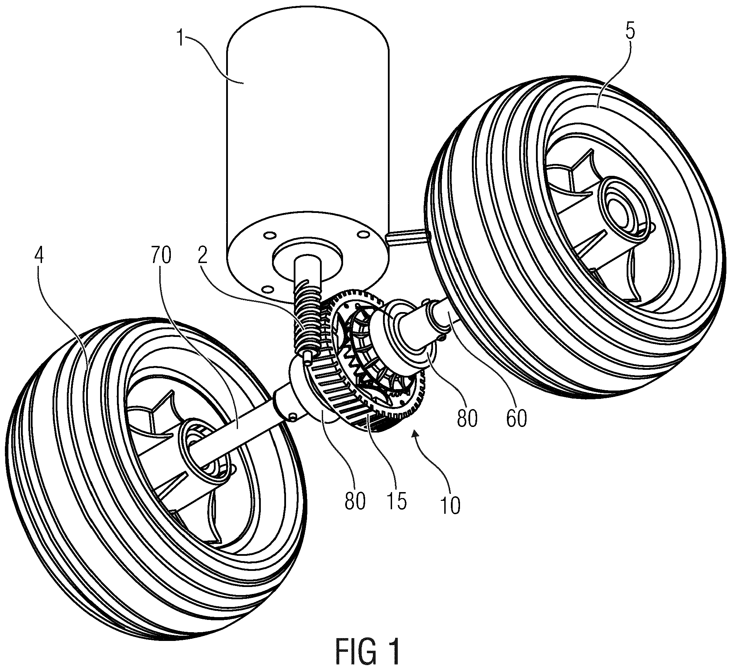

Figure 1 shows a transmission system of a golf buggy having an electric motor 1 with a drive shaft 2. The driveshaft 2 of the motor 1 drives a differential 10 which is connected to the left buggy wheel 4 and the right buggy wheels 5.

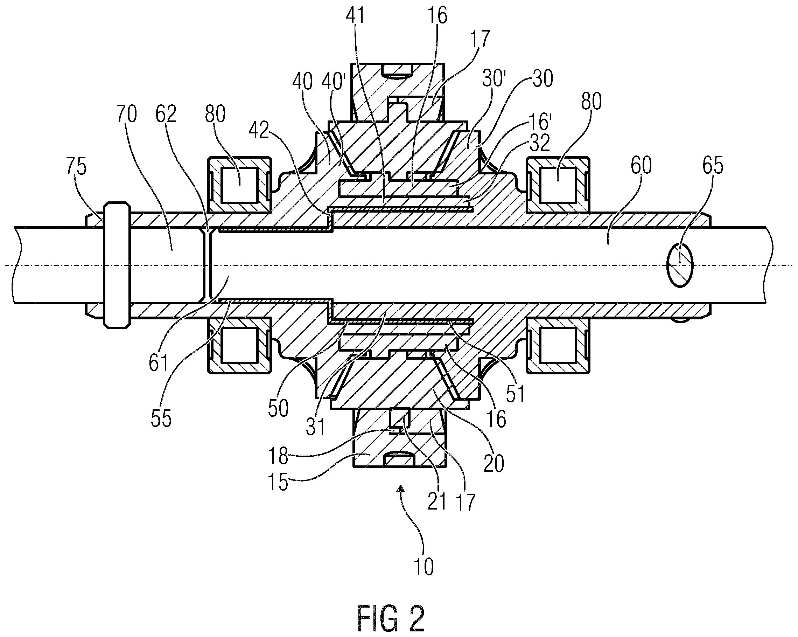

Figure 2 shows the components of the differential 10. The differential 10 has a drive gear, shown as crown wheel gear 15, which is driven by a worm on the drive shaft 2. The crown wheel gear 15 houses four planetary gears 20. The four planetary gears 20 are equally spaced around the crown wheel gear 15 and are bevelled. The planetary gears 20 engage with a bevel gear 30' of a first axle cover 30 and a bevel gear 40' of a second axle cover 40. The first axle cover 30 and the second axle cover 40 are each supported by a bearing 80, allowing the first axle cover 30 and the second axle cover 40 to rotate relative to the chassis of the golf buggy.

The first axle cover 30 is hollow. Located inside of the first axle cover 30 is a first axle 60. The first axle 60 is secured to the first axle cover 30 by a pin 65. The pin 65 ensures that rotational movement of the first axle cover 30 is transferred to the first axle 60. The second axle cover 40 is also hollow, having a second axle 70 located inside of it. The second axle 70 is secured to the second axle cover 40 by a pin 75. The first and second axles 60, 70 coaxially align end to end with a small gap 62 therebetween to allow tolerance for rotation of one axle without interference by the other.

The first and second axle covers 30,40 have bevel gears 30',40', having teeth (not shown) that engage teeth of the planetary gears 20. The first and second axle covers 30,40 are formed as two separate parts that are integrally connected. Specifically, the axle covers are formed from a moulded plastics bevel gear into which a hollow metal shaft is integrally connected. Preferably the plastics bevel gear is injection moulded, and more preferably the plastics bevel gear is injection moulded from a polymer material such as polypropylene (PP), polyvinyl chloride (PVC), polyethylene (PE), polystyrene (PS), polyformaldehyde (also known as polyoxymethylene - POM), or a combination thereof.

The crown wheel gear 15 is made from plastics material. Preferably the crown wheel gear 15 is injection moulded, and more preferably the crown wheel gear 15 is injection moulded from a polymer material such as polypropylene (PP), polyvinyl chloride (PVC), polyethylene (PE), polystyrene (PS), polyformaldehyde, or a combination thereof. The crown wheel gear 15 has a cut out 17 for each of the planetary gears 20. The cut outs 17 extend through the crown wheel gear so that each planetary gear 20 can engage with both of the first and second bevel gears 30',40'. In other words, the planetary gears 20 extend away from the crown wheel gear 15 to engage the first and second bevel gears 30',40'.

The planetary gears 20 are made from plastics material. Preferably the planetary gears 20 are injection moulded, and more preferably the planetary gears 20 are injection moulded from a polymer material such as polypropylene (PP), polyvinyl chloride (PVC), polyethylene (PE), polystyrene (PS), polyformaldehyde, or a combination thereof, or a zinc alloy material. The planetary gears 20 also have metal pins 21 that extend through the planetary gears 20 in order to locate the planetary gears 20 in the crown wheel gear 15, which houses each of the planetary gears 20. Slots 18 are provided in the crown wheel gear 15 that correspond to the pins 21 in the planetary gears 20. The slots 18 do not extend the entire way through the crown wheel gear 15, and thereby in combination with the pins 21 retain the planetary gears 20 in a position that is half way through the thickness of the crown wheel gear 15.

As the slots 18 do not extend through the crown wheel gear 15 assembly of the differential 10 is made easier as the crown wheel gear 15 can be held on its side so that the planetary gears 20 can be "dropped" into their respective cut outs 17.

While the materials used in the embodiment described have been specified above, it will be understood that the components could be made from any suitable material. For example, all of the components could be made from metal.

The differential 10 has a torque transmission damper 50 (shown as black line in Fig 2) between the first axle cover 30 and the second axle cover 40. The torque transmission damper has two torque damping regions 51, 55. The torque transmission damper 50 causes the first axle cover 30 and the second axle cover 40 to rotate at the same speed when the torque differential between the first axle cover 30 and the second axle cover 40 is less than a predetermined level.

This set up results in the differential 10 acting as a "locked" differential when the difference in torque between the first axle cover 30 and the second axle cover 40 is below the predetermined level. That is, when the difference in torque between the first axle cover 30 and the second axle cover 40 is below the predetermined level the torque damping regions 51, 55 force the first axle cover 30 and the second axle cover 40 to rotate at the same speed. As a result, the first axle 60 and the second axle 70 rotate at the same speed, which in turn drives the right buggy wheel 5 and the left buggy wheel 4 at the same speed, causing the buggy to move in a straight line. This is advantageous as the constantly varying surface of a golf course can cause a standard differential to almost constantly allow the wheels to rotate at different speeds, making it difficult to more the buggy in a relatively straight line.

When the differential 10 acts as a "locked" differential the planetary gears 20 do not rotate and the first and second axle covers 30, 40 rotate at the same speed as the crown wheel gear 15.

When the difference in torque between the first and second axle covers 30, 40 exceeds the predetermined level the differential acts as a normal differential, as opposed to a locked differential, and allows the first and second axle covers 30, 40 to rotate at different speeds. The different, rates of rotation of the first and second axle covers 30, 40 is facilitated by planetary gears 20 rotating. The ability of the left wheel 4 and the right wheel 5 to turn at different speeds helps when the buggy needs to turn, as during turning the outer wheel needs to travel a greater distance, and therefore needs to rotate faster.

While the embodiment described uses four planetary gears 20, it will be understood that the differential will function with a single planetary gear.

The damping in the torque damping regions 51, 55 is caused by friction. A first torque damping region 51 comprises a first cylinder 31 attached to the first axle cover 30 (and namely, in the preferred embodiment, formed with the first axle cover) and a second cylinder 41 attached to the second axle cover 40 (again, the second cylinder is formed integrally with the second axle cover).

The first cylinder 31 sits inside the second cylinder 41 such that an outer surface of the first cylinder 31 is in engagement with an inner surface of the second cylinder 41. The engagement between the cylinders 31, 41 is facilitated by a friction medium that acts to cause viscous friction when the first axle cover 30 attempts to rotate relative to the second axle cover 40. The friction medium may be any suitable viscous material such as grease. For example, the grease could be automotive grease, bearing grease or any other suitable grease.

The level of viscous frictional engagement between the first cylinder 31 the second cylinder 41 can be based on three factors. The first factor is the surface area of the viscous frictional engagement. This is determined by the diameters of the first cylinder 31 and the second cylinder 41, and also the length of the viscous frictional engagement. Increasing the surface area of the viscous frictional engagement will increase the torque differential that is required between the first axle cover 30 and the second axle cover 40 for the axle covers 30,40 to rotate at different speeds.

The second factor is the viscosity of the friction medium used between the cylinders 31, 41. Increasing the viscosity of the friction medium, for example by using a different material, such as a more viscous grease, will increase the torque differential that is required between the first axle cover 30 and the second axle cover 40 for the axle covers to to rotate at different speeds.

The third factor is the amount of friction medium used between the cylinders 31, 41. Depending on the friction material used, the thickness of the friction medium may also affect the level of viscous frictional engagement between the first and second cylinders 31, 41. The thickness of the friction medium will depend on the gap between the outer surface of the first cylinder 31 and the inner surface of the second cylinder 41 (i.e. the tolerancing between the first and second cylinders 31, 41} .

By altering the factors mentioned above it is possible to alter the frictional engagement between the first and second bevel gears and thereby adjust the predetermined level, below which the differential acts as a "locked" differential. The predetermined level can therefore be selected to be higher or lower, ie. a greater difference in torque or less difference in torque, by selecting a grease with greater or less viscosity and/or by dimensioning the first and second cylinders 31, 41 to increase or decrease the surface area on the cylinders that is exposed to the friction medium.

The value of the predetermined level is preferably chosen so that the differential will act as a "locked" differential at low differences in torque (e.g. caused when a user directs the buggy to go straight and the buggy is traversing the constantly varying surface of the gold course), and so that the differential will act as a normal differential at high differences in torque (e.g. caused when a user directs the buggy to turn).

A second torque damping region 55 comprises an interaction between an end portion 61 of the first axle 60 slidably received in the hollow interior of the second axle cover 40. The end portion 61 of the first axle 60 extends through the first axle cover 30 so that it is able to engage with interior of the second axle cover 40. Again, the engagement between the end portion 61 and the interior of the second axle cover 40 is facilitated by a friction medium, such as grease. The grease may be any suitable grease but is more preferably damping grease.

In the embodiment described the maximum output torque through the crown wheel gear 15 is 12Nm and the predetermine level is between approximately 3.5Nm and 4.5Nm.

It will be understood that in order for the differential to function only one torque damping region is required. That is, the torque transmission damper could be either at the combination of cylinder 31 and cylinder 41 (torque damping region 51), or could be at the combination of end portion 61 and the hollow interior of second axle cover 40 (torque damping region 55). Alternatively, the torque transmission damper could be any other suitable frictional engagement that causes the first axle cover 30 and the second axle cover 40 to rotate the same speed when the torque differential between the first axle cover 30 and the second axle cover 40 is less than a predetermined level.

The second axle cover 40 has a shoulder 42 that the cylinder 31 of the first axle cover abuts when the first axle cover 30 and the second axle cover 40 are assembled. In addition, the first axle cover 30 has a shoulder 32 that the second cylinder 41 of the second axle cover 40 abuts when the first gear the axle cover 30 and the second axle cover 40 are assembled. The shoulders 32,42 maintain a desired distance between the axle covers 30,40 that corresponds to the size of the planetary gears 20.

The crown wheel gear 15 also has an aperture, shown as hollow hub 16, that supports the outer surface of the cylinder 41 second axle cover 40. The hub 16 also has shoulders 16' that contact the axle covers 30,40 to keep the crown wheel gear 15 in the centre of the axle covers 30,40.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A differential (10) for a golf buggy comprising:
a drive gear (15);
one or more planetary gears (20) connected to the drive gear (15);
a first bevel gear (30') mated with the one or more planetary gears (20);
a second bevel gear (40') mated with the one or more planetary gears (20); and
a torque transmission damper (50) between the first bevel gear (30') and the second bevel gear (40') causes the first bevel gear (30') and the second bevel gear (40') to rotate at the same speed when the difference in torque between the first bevel gear (30') and the second bevel gear (40') is less than a predetermined level;
**characterised in that** the transmission damper (50) comprises a first cylinder (31) attached to the first bevel gear (30') and a second cylinder (41) attached to the second bevel gear (40'), an outer surface of the first cylinder (31) being slidably received within an inner surface of the second cylinder (41).

2. The differential (10) claimed in claim 1, **characterised in that** the transmission damper (50) further comprises a friction medium between the first cylinder (31) and the second cylinder (41) so the first and second cylinders (31, 41) engage to rotate together below the predetermined level.

3. The differential (10) claimed in claim 1 or claim 2, **characterised in that** the first cylinder (31) is permanently attached to the first bevel gear (30') and the second cylinder (41) is permanently attached to the second bevel gear (40').

4. The differential (10) claimed in any one of the preceding claims, **characterised in that** the friction medium is grease.

5. The differential (10) claimed in claim 4, **characterised in that** the grease is automotive grease, bearing grease or damping grease.

6. The differential (10) claimed in any one of the preceding claims, **characterised in that** the first bevel gear (30') and the first cylinder (31) house a first axle (60), an end portion of the first axle (60) being fixedly received in the first cylinder (31).

7. The differential (10) claimed in claim 6, **characterised in that** an end portion (61) of the first axle (60) is slidably received within a hollow interior of the second bevel gear (40').

8. The differential (10) claimed in any one of the preceding claims, **characterised in that** the predetermined level is between approximately 3.5Nm and 4.5Nm.

9. The differential (10) claimed in any one of the preceding claims, **characterised in that** the drive gear (15) comprises an aperture (16) that supports an outer surface of the second cylinder (41).

10. The differential (10) claimed in any one of the preceding claims, **characterised in that** there are four planetary gears (20).

11. The differential (10) claimed in any one of the preceding claims, **characterised in that** the drive gear (15), planetary gears (20) and bevel gears (30', 40') are formed from a plastics material.

12. The differential (10) claimed in any one of the preceding claims, **characterised in that** the drive gear (15) has a cut out (17) for each of the one or more planetary gears (20).

13. The differential (10) claimed in claim 12, **characterised in that** the one or more planetary gears (20) extend away from the drive gear (15) to engage the first and second bevel gears (30', 40').

14. The differential (10) claimed in any one of the preceding claims, **characterised in that** the one or more planetary gears (20) are retained in a position that is half way through a thickness of the drive gear (15).

15. The differential (10) claimed in any one of the preceding claims, **characterised in that** the differential is a golf buggy differential.

## Patentansprüche

1. Ein Differential (10) für einen Golfwagen, das folgende Merkmale aufweist:
ein Antriebsgetrieberad (15);
ein oder mehrere Planetengetrieberäder (20), die mit dem Antriebsgetrieberad (15) verbunden sind;
ein erstes Kegelgetrieberad (30'), das mit dem einen oder den mehreren Planetengetrieberädern (20) zusammenpasst;
ein zweites Kegelgetrieberad (40'), das mit dem einen oder den mehreren Planetengetrieberädern (20) zusammenpasst; und
wobei ein Drehmomentübertragungsdämpfer (50) zwischen dem ersten Kegelgetrieberad (30') und dem zweiten Kegelgetrieberad (40') bewirkt, dass sich das erste Kegelgetrieberad (30') und das zweite Kegelgetrieberad (40') mit derselben Geschwindigkeit drehen, wenn die Differenz des Drehmoments zwischen dem ersten Kegelgetrieberad (30') und dem zweiten Kegelgetrieberad (40') kleiner als ein vorbestimmtes Niveau ist;
**dadurch gekennzeichnet, dass** der Übertragungsdämpfer (50) einen ersten Zylinder (31), der an dem ersten Kegelgetrieberad (30') angebracht ist, und einen zweiten Zylinder (41) aufweist, der an dem zweiten Kegelgetrieberad (40') angebracht ist, wobei eine Außenoberfläche des ersten Zylinders (31) verschiebbar in einer Innenoberfläche des zweiten Zylinders (41) aufgenommen ist.

2. Das Differential (10) gemäß Anspruch 1, das **dadurch gekennzeichnet ist, dass** der Übertragungsdämpfer (50) ferner ein Reibungsmedium zwischen dem ersten Zylinder (31) und dem zweiten Zylinder (41) aufweist, so dass der erste und der zweite Zylinder (31, 41) dahin gehend in Eingriff stehen, sich gemeinsam unterhalb des vorbestimmten Niveaus zu drehen.

3. Das Differential (10) gemäß Anspruch 1 oder Anspruch 2, das **dadurch gekennzeichnet ist, dass** der erste Zylinder (31) dauerhaft an dem ersten Kegelgetrieberad (30') angebracht ist und der zweite Zylinder (41) dauerhaft an dem zweiten Kegelgetrieberad (40') angebracht ist.

4. Das Differential (10) gemäß einem der vorhergehenden Ansprüche, das **dadurch gekennzeichnet ist, dass** das Reibungsmedium Fett ist.

5. Das Differential (10) gemäß Anspruch 4, das **dadurch gekennzeichnet ist, dass** das Fett Kraftfahrzeugfett, Lagerfett oder Dämpfungsfett ist.

6. Das Differential (10) gemäß einem der vorhergehenden Ansprüche, das **dadurch gekennzeichnet ist, dass** das erste Kegelgetrieberad (30') und der erste Zylinder (31) eine erste Achse (60) unterbringen, wobei ein Endabschnitt der ersten Achse (60) fest in dem ersten Zylinder (31) aufgenommen ist.

7. Das Differential (10) gemäß Anspruch 6, das **dadurch gekennzeichnet ist, dass** ein Endabschnitt (61) der ersten Achse (60) verschiebbar in einem hohlen Inneren des zweiten Kegelgetrieberades (40') aufgenommen ist.

8. Das Differential (10) gemäß einem der vorhergehenden Ansprüche, das **dadurch gekennzeichnet ist, dass** das vorbestimmte Niveau zwischen etwa 3,5 Nm und 4,5 Nm liegt.

9. Das Differential (10) gemäß einem der vorhergehenden Ansprüche, das **dadurch gekennzeichnet ist, dass** das Antriebsgetrieberad (15) eine Öffnung (16) aufweist, die eine Außenoberfläche des zweiten Zylinders (41) trägt.

10. Das Differential (10) gemäß einem der vorhergehenden Ansprüche, das **dadurch gekennzeichnet ist, dass** vier Planetengetrieberäder (20) vorhanden sind.

11. Das Differential (10) gemäß einem der vorhergehenden Ansprüche, das **dadurch gekennzeichnet ist, dass** das Antriebsgetrieberad (15), die Planetengetrieberäder (20) und die Kegelgetrieberäder (30', 40') aus Kunststoffmaterial gebildet sind.

12. Das Differential (10) gemäß einem der vorhergehenden Ansprüche, das **dadurch gekennzeichnet ist, dass** das Antriebsgetrieberad (15) eine Aussparung (17) für jedes des einen oder der mehreren Planetengetrieberäder (20) aufweist.

13. Das Differential (10) gemäß Anspruch 12, das **dadurch gekennzeichnet ist, dass** sich das eine oder die mehreren Planetengetrieberäder (20) vom Antriebsgetrieberad (15) weg erstrecken, um das erste und das zweite Kegelgetrieberad (30', 40') in Eingriff zu nehmen.

14. Das Differential (10) gemäß einem der vorhergehenden Ansprüche, das **dadurch gekennzeichnet ist, dass** das eine oder die mehreren Planetengetrieberäder (20) in einer Position gehalten werden, die halb durch eine Dicke des Antriebsgetrieberades (15) hindurch ist.

15. Das Differential (10) gemäß einem der vorhergehenden Ansprüche, das **dadurch gekennzeichnet ist, dass** das Differential ein Golfwagendifferential ist.

## Revendications

1. Différentiel (10) pour une voiturette de golf, comprenant:
un engrenage d'entraînement (15);
un ou plusieurs engrenages planétaires (20) connectés à l'engrenage d'entraînement (15);
un premier engrenage conique (30') uni aux un ou plusieurs engrenages planétaires (20);
un deuxième engrenage conique (40') uni aux un ou plusieurs engrenages planétaires (20); et
un amortisseur de transmission de couple (50) entre le premier engrenage conique (30') et le deuxième engrenage conique (40') fait que le premier engrenage conique (30') et le deuxième engrenage conique (40') tournent à la même vitesse lorsque la différence de couple entre le premier engrenage conique (30') et le deuxième engrenage conique (40') est inférieure à un niveau prédéterminé;
**caractérisé par le fait que** l'amortisseur de transmission (50) comprend un premier cylindre (31) fixé au premier engrenage conique (30') et un deuxième cylindre (41) fixé au deuxième engrenage conique (40'), une surface extérieure du premier le cylindre (31) étant reçue de manière coulissante dans une surface intérieure du deuxième cylindre (41).

2. Différentiel (10) selon la revendication 1,
**caractérisé par le fait que** l'amortisseur de transmission (50) comprend par ailleurs un fluide de friction entre le premier cylindre (31) et le deuxième cylindre (41) de sorte que les premier et deuxième cylindres (31, 41) viennent en prise pour tourner ensemble au-dessous du niveau prédéterminé.

3. Différentiel (10) selon la revendication 1 ou la revendication 2,
**caractérisé par le fait que** le premier cylindre (31) est fixé de manière permanente au premier engrenage conique (30') et le deuxième cylindre (41) est fixé de manière permanente au deuxième engrenage conique (40').

4. Différentiel (10) selon l'une quelconque des revendications précédentes, **caractérisé par le fait que** le fluide de friction est de la graisse.

5. Différentiel (10) selon la revendication 4,
**caractérisé par le fait que** la graisse est une graisse automobile, une graisse pour paliers ou une graisse d'amortissement.

6. Différentiel (10) selon l'une quelconque des revendications précédentes, **caractérisé par le fait que** le premier engrenage conique (30') et le premier cylindre (31) abritent un premier essieu (60), une partie d'extrémité du premier essieu (60) étant reçue de manière fixe dans le premier cylindre (31).

7. Différentiel (10) selon la revendication 6,
**caractérisé par le fait qu'**une partie d'extrémité (61) du premier essieu (60) est reçue de manière coulissante dans un intérieur creux du deuxième engrenage conique (40').

8. Différentiel (10) selon l'une quelconque des revendications précédentes, **caractérisé par le fait que** le niveau prédéterminé est compris entre environ 3,5Nm et 4,5Nm.

9. Différentiel (10) selon l'une quelconque des revendications précédentes, **caractérisé par le fait que** l'engrenage d'entraînement (15) comprend une ouverture (16) qui supporte une surface extérieure du deuxième cylindre (41).

10. Différentiel (10) selon l'une quelconque des revendications précédentes, **caractérisé par le fait qu'**il y a quatre engrenages planétaires (20).

11. Différentiel (10) selon l'une quelconque des revendications précédentes, **caractérisé par le fait que** l'engrenage d'entraînement (15), les engrenages planétaires (20) et les engrenages coniques (30', 40') sont réalisés en un matériau plastique.

12. Différentiel (10) selon l'une quelconque des revendications précédentes, **caractérisé par le fait que** l'engrenage d'entraînement (15) présente une découpe (17) pour chacun des un ou plusieurs engrenages planétaires (20).

13. Différentiel (10) selon la revendication 12,
**caractérisé par le fait que** les un ou plusieurs engrenages planétaires (20) s'étendent en s'éloignant de l'engrenage d'entraînement (15) pour venir en prise avec les premier et deuxième engrenages coniques (30', 40').

14. Différentiel (10) selon l'une quelconque des revendications précédentes, **caractérisé par le fait que** les un ou plusieurs engrenages planétaires (20) sont maintenus dans une position qui est à mi-chemin de l'épaisseur de l'engrenage d'entraînement (15).

15. Différentiel (10) selon l'une quelconque des revendications précédentes, **caractérisé par le fait que** le différentiel est un différentiel de voiturette de golf.
